(19) Europäisches Patentamt / European Patent Office / Office européen des brevets

(11) **EP 4 252 026 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **21819110.4**

(22) Anmeldetag: **23.11.2021**

(51) Internationale Patentklassifikation (IPC):
**G01S 7/48** *(2006.01)*    **G01S 7/4915** *(2020.01)*
**G01S 7/497** *(2006.01)*    **G01S 17/36** *(2006.01)*
**G01S 17/931** *(2020.01)*    **G01S 7/40** *(2006.01)*
**G01S 13/36** *(2006.01)*    **G01S 13/931** *(2020.01)*

(52) Gemeinsame Patentklassifikation (CPC):
**G01S 17/36; G01S 7/4808; G01S 7/4915;**
**G01S 7/497; G01S 17/931;** G01S 7/40;
G01S 13/36; G01S 13/931

(86) Internationale Anmeldenummer:
**PCT/EP2021/082588**

(87) Internationale Veröffentlichungsnummer:
**WO 2022/112203 (02.06.2022 Gazette 2022/22)**

(54) **VERFAHREN ZUM BETREIBEN EINER DETEKTIONSVORRICHTUNG ZUR BESTIMMUNG VON TEMPERATURKORRIGIERTEN ENTFERNUNGSGRÖSSEN, ENTSPRECHENDE DETEKTIONSVORRICHTUNG UND FAHRZEUG MIT WENIGSTENS EINER SOLCHEN DETEKTIONSVORRICHTUNG**

METHOD FOR OPERATING A DETECTION DEVICE FOR DETERMINING TEMPERATURE-ADJUSTED DISTANCE VARIABLES, CORRESPONDING DETECTION DEVICE, AND VEHICLE HAVING AT LEAST ONE DETECTION DEVICE OF THIS KIND

PROCÉDÉ DE FONCTIONNEMENT D'UN DISPOSITIF DE DÉTECTION POUR DÉTERMINER DES VARIABLES DE DISTANCE AVEC RÉGLAGE DE TEMPÉRATURE, DISPOSITIF DE DÉTECTION CORRESPONDANT ET VÉHICULE COMPORTANT AU MOINS UN DISPOSITIF DE DÉTECTION DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2020 DE 102020131288**

(43) Veröffentlichungstag der Anmeldung:
**04.10.2023 Patentblatt 2023/40**

(73) Patentinhaber: **Valeo Schalter und Sensoren GmbH**
**74321 Bietigheim-Bissingen (DE)**

(72) Erfinder:
• **PARL, Christoph**
**74321 Bietigheim-Bissingen (DE)**
• **KRAUSE, Jonas**
**74321 Bietigheim-Bissingen (DE)**
• **SELBMANN, Frank**
**74321 Bietigheim-Bissingen (DE)**

(74) Vertreter: **Pothmann, Karsten**
**Valeo Schalter und Sensoren GmbH**
**CDA-IP**
**Laiernstraße 12**
**74321 Bietigheim-Bissingen (DE)**

(56) Entgegenhaltungen:
CN-A- 111 722 243    DE-A1- 102013 205 605
DE-A1- 102016 122 830    DE-T2- 69 633 524
US-A1- 2019 293 768

## Beschreibung

### Technisches Gebiet

Die Erfindung betrifft ein Verfahren zum Betreiben einer Detektionsvorrichtung zur Bestimmung von Entfernungsgrößen, welche Entfernungen von mit der Detektionsvorrichtung erfassten Objekten charakterisieren, bei dem

aus wenigstens einem amplitudenmodulierten elektrischen Sendesignal wenigstens ein Abtastsignal erzeugt wird, welches in wenigstens einen Überwachungsbereich der Detektionsvorrichtung gesendet wird,
aus wenigstens einem Echosignal wenigstens eines in dem wenigstens einen Überwachungsbereich reflektierten Abtastsignals wenigstens ein amplitudenmoduliertes elektrisches Empfangssignal ermittelt wird
aus wenigstens einem elektrischen Sendesignal und wenigstens einem elektrischen Empfangssignal wenigstens eine Entfernungsgröße ermittelt wird,
wobei bei der Ermittlung der wenigstens einen Entfernungsgröße wenigstens eine Korrektur durchgeführt wird.

Ferner betrifft die Erfindung eine Detektionsvorrichtung zur Bestimmung von Entfernungsgrößen, welche Entfernungen von mit der Detektionsvorrichtung erfassten Objekten charakterisieren,

mit wenigstens einer Sendeeinrichtung, mit welcher aus wenigstens einem amplitudenmodulierten elektrischen Sendesignal wenigstens ein Abtastsignal erzeugt und in wenigstens einen Überwachungsbereich der Detektionsvorrichtung gesendet wird,

mit wenigstens einer Empfangseinrichtung, mit welcher aus wenigstens einem Echosignal wenigstens eines in dem wenigstens einen Überwachungsbereich reflektierten Abtastsignals wenigstens ein amplitudenmoduliertes elektrisches Empfangssignal ermittelt wird, mit wenigstens einem Entfernungsermittlungsmittel zur Ermittlung wenigstens einer Entfernungsgröße aus wenigstens einem elektrischen Sendesignal und wenigstens einem elektrischen Empfangssignal

und mit wenigstens einem Korrekturmittel zur Durchführung wenigstens einer Korrektur der wenigstens einen Entfernungsgröße.

Außerdem betrifft die Erfindung ein Fahrzeug mit wenigstens einer Detektionsvorrichtung zur Bestimmung von Entfernungsgrößen, welche Entfernungen von mit der Detektionsvorrichtung erfassten Objekten relativ zu dem Fahrzeug charakterisieren,

mit wenigstens einer Sendeeinrichtung, mit welcher aus wenigstens einem amplitudenmodulierten elektrischen Sendesignal wenigstens ein Abtastsignal erzeugt und in wenigstens einen Überwachungsbereich der Detektionsvorrichtung gesendet wird, mit wenigstens einer Empfangseinrichtung, mit welcher aus wenigstens einem Echosignal wenigstens eines in dem wenigstens einen Überwachungsbereich reflektierten Abtastsignals wenigstens ein elektrisches Empfangssignal ermittelt wird, mit wenigstens einem Entfernungsermittlungsmittel zur Ermittlung wenigstens einer Entfernungsgröße aus wenigstens einem elektrischen Sendesignal und wenigstens einem elektrischen Empfangssignal
und mit wenigstens einem Korrekturmittel zur Durchführung wenigstens einer Korrektur der wenigstens einen Entfernungsgröße.

### Stand der Technik

Aus der US 2020/0018836 A1 ist eine Entfernungsmessvorrichtungen bekannt. Bei der Entfernungsmessvorrichtung handelt es sich um eine TOF-Kamera, die den Abstand zu einem Objekt z.B. mit Hilfe eines Phasendifferenzverfahrens misst. Die Entfernungsmessvorrichtung umfasst einen lichtemittierenden Abschnitt, der Referenzlicht zu einem Ziel-Messraum aussendet, einen lichtempfangenden Abschnitt, der einfallendes Licht aus dem Ziel-Messraum empfängt, und einen Entfernungsbild-Erzeugungsabschnitt, der ein Entfernungsbild zu dem Objekt im Ziel-Messraum erzeugt. Die Entfernungsmessvorrichtung verwendet die Entfernung zu einem Referenzobjekt, die geometrisch aus dem zweidimensionalen Bild berechnet wurde, um einen Korrekturbetrag zur Korrektur des Entfernungsbildes zu berechnen.

Aus der DE 10 2013 205 605 A1 ist eine gattungsgemäße Entfernungsmessvorrichtung bekannt. Diese ist als Lichlaufzeitmessystem ausgebildet und umfasst eine Lichtquelle, die ein amplitudenmoduliertes Signal aussendet, einen Lichtlaufzeitphotosensor, der das ein an einem Objekt in der Umgebung reflektierte Signal empfängt, sowie eine Auswerteeinheit, um anhand der Phasenverschiebung zwischen gesendetem und empfangenem Signal die Lichtlaufzeit und somit die Entfernung zum Objekt zu ermitteln. Zur Kompensation von Temperatureinflüssen auf die Messung wird die Temperatur in der Nähe der Lichtquelle über einen ersten und einen zweiten Temperatursensor gemessen und die gemessene Entfernung anhand bekannter Abhängigkeiten korrigiert.

Darüber hinaus offenbaren die Dokumente US 2019/293768 A1, DE 10 2016 122 830 A1, DE 696 33 524 T2 und CN 111 722 243 A jeweils Detektionsvorrichtungen zur Bestimmung von Entfernungsgrößen mit Temperaturkompensation.

Der Erfindung liegt die Aufgabe zugrunde, ein Verfahren, eine Detektionsvorrichtung und ein Fahrzeug der eingangs genannten Art zu gestalten, bei der Bestimmungen von Entfernungen von Objekten verbessert werden können.

## Offenbarung der Erfindung

Diese Aufgabe wird erfindungsgemäß bei dem Verfahren dadurch gelöst, dass wenigstens eine Temperaturkorrektur durchgeführt wird, bei der wenigstens eine Entfernungsgröße mit wenigstens einer Temperaturkorrekturgröße beaufschlagt wird, welche für die wenigstens eine Entfernungsgröße und eine herrschende Temperatur individuell vorgegeben wird.

Erfindungsgemäß wird eine Temperaturkorrektur durchgeführt, mit welcher der Einfluss der herrschenden Temperatur auf die Bestimmung der Entfernungsgrößen kompensiert wird.

Bekanntermaßen können Sende- und Empfangskomponenten innerhalb einer Detektionsvorrichtung temperaturabhängige Verzögerungen aufweisen. Daher können sich auch die Entfernungsgrößen, welche mit der Detektionsvorrichtung bestimmt werden können, mit der Systemtemperatur ändern. Mithilfe der erfindungsgemäßen Temperaturkorrektur wird der Temperatureinfluss kompensiert.

Vorteilhafterweise können für den gesamten Temperaturbereich, dem die Detektionsvorrichtung ausgesetzt sein kann, entsprechende Temperaturkorrekturgrößen vorgegeben werden. Bei der Verwendung der Detektionsvorrichtung in Kraftfahrzeugen können mit den vorgegebenen dem Porto Korrekturgröße Einflüsse durch Temperaturen im Bereich beispielsweise zwischen -40 °C und 85 °C kompensiert werden.

Erfindungsgemäß wird die wenigstens eine Entfernungsgröße mit wenigstens einer für diese Entfernungsgröße individuelle Temperaturkorrekturgröße beaufschlagt. Auf diese Weise kann ein Temperatureinfluss auch abhängig von der mit der Detektionsvorrichtung bestimmten Entfernungsgröße korrigiert werden. So können Temperatureinflüsse bei unterschiedlichen Entfernungen, also unterschiedlichen Entfernungsgrößen, kompensiert werden. So können auch Temperatureinflüsse kompensiert werden, welche über die messbaren Entfernungen variieren können.

Vorteilhafterweise kann die wenigstens eine Detektionsvorrichtung nach einem indirekten Signal-Laufzeitverfahren arbeiten. Nach einem Signal-Laufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR), Radarsysteme oder dergleichen ausgestaltet und bezeichnet werden. Bei einem indirekten Signal-Laufzeitverfahren kann eine durch die Laufzeit des Abtastsignals zum des entsprechenden Echosignals bedingte Phasenverschiebung des Empfangssignals gegenüber dem Sendesignal ermittelt werden. Aus der Phasenverschiebung kann die Entfernung eines Objekts ermittelt werden, an dem das entsprechende Abtastsignal reflektiert wird.

Vorteilhafterweise kann die Detektionsvorrichtung als laserbasiertes Entfernungsmesssystem ausgestaltet sein. Ein laserbasiertes Entfernungsmesssystem kann als Lichtquelle einer Sendeeinrichtung wenigstens einen Laser, insbesondere einen Diodenlaser, aufweisen. Mit dem wenigstens einen Laser können insbesondere gepulste Licht-Abtastsignale gesendet werden. Mit dem Laser können Abtastsignale in für das menschliche Auge sichtbaren oder nicht sichtbaren Wellenlängenbereichen emittiert werden. Entsprechend kann wenigstens ein Empfänger einen für die Wellenlänge des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit einem Laserscanner kann ein Überwachungsbereich mit einem insbesondere gepulsten Abtastsignal abgetastet werden.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann wenigstens ein Teil der Funktionen des Fahrzeugs oder der Maschine autonom oder teilautonom betrieben werden.

Mit der Detektionsvorrichtung können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei der erfindungsgemäßen Ausgestaltung des Verfahrens wird

die wenigstens eine Entfernungsgröße ermittelt unter der Annahme, dass das wenigstens eine amplitudenmodulierte Sendesignal und das wenigstens eine amplitudenmodulierte Empfangssignal jeweils Basis-Hüllkurvenformen aufweisen,

und wenigstens eine Signalformkorrektur durchgeführt wird, bei der Abweichungen von realen Hüllkurvenformen der Sendesignale und der Empfangssignale von den Basis-Hüllkurvenformen korrigiert werden.

Als Basis-Hüllkurvenformen können vorteilhafterweise Hüllkurvenformen angenommen werden, welche eine einfachere Berechnung zulassen als die der realen Hüllkurvenformen.

Für die eigentliche Messung können die technisch einfacher realisierbaren realen Hüllkurvenformen verwendet werden. Mit der Signalformkorrektur kann die aus den Basis-Hüllkurvenformen ermittelte wenigstens eine Entfernungsgröße an die realen Hüllkurvenformen angepasst werden. Insgesamt kann so das Verfahren zur Bestimmung der Entfernungsgrößen einfacher realisiert werden.

Bei einer weiteren vorteilhaften Ausführungsform können als Basis-Hüllkurvenformen für wenigstens ein Sendesignal und wenigstens ein Empfangssignal Sinuskurvenformen verwendet werden und/oder als reale Hüllkurvenformen Dreieckskurvenformen, Sägezahnkurvenformen oder dergleichen verwendet werden.

Auf Basis von Sinuskurven kann das wenigstens eine Empfangssignal einfach trigonometrisch berechnet werden. Amplitudenmodulierte Sendesignale, Abtastsignale, Echosignale und Empfangssignale auf Basis von Dreieckskurven, Sägezahnkurven oder dergleichen können technisch einfacher umgesetzt werden und sind weniger störungsanfällig.

Bei einer weiteren vorteilhaften Ausgestaltung des Verfahrens können zur Temperaturkorrektur und/oder zur Signalformkorrektur Korrekturgrößen aus wenigstens einer Korrekturtabelle verwendet werden. Auf diese Weise kann schnell auf die entsprechenden Korrekturgrößen zugegriffen werden. Die wenigstens eine Korrekturtabelle kann vorab, insbesondere am Ende einer Produktionslinie, aufgenommen werden.

Vorteilhafterweise kann wenigstens ein Teil wenigstens einer Korrekturtabelle für mehrere Detektionsvorrichtungen einer Bauart verwendet werden. Auf diese Weise kann ein Herstellungsaufwand, insbesondere ein Kalibrationsaufwand, verringert werden.

Bei einer weiteren vorteilhaften Ausgestaltung des Verfahrens kann wenigstens ein Empfangssignal in mehreren zeitlich definierten Aufnahmezeitbereichen erfasst werden und aus den jeweiligen Aufnahmezeitbereichen zugeordneten Empfangsgrößen eine Entfernungsgröße ermittelt werden. Auf diese Weise kann über die Empfangsgrößen aus den zeitlich definierten Aufnahmezeitbereichen der zeitliche Verlauf wenigstens eines Teils der Empfangs-Hüllkurve des wenigstens einen Empfangssignals ermittelt werden. Aus dem zeitlichen Verlauf des wenigstens einen Teils der Empfangs-Hüllkurve kann eine Phasendifferenz zwischen der Empfangs-Hüllkurve und der Sende-Hüllkurve des wenigstens einen Sendesignals ermittelt werden. Phasendifferenz kann wenigstens eine Entfernungsgröße ermittelt werden.

Vorteilhafterweise können die Aufnahmezeitbereiche in ihrer zeitlichen Länge und/oder in ihren zeitlichen Abständen definiert sein. Auf diese Weise kann die Empfangs-Hüllkurve des wenigstens einen Empfangssignals genauer ermittelt werden.

Vorteilhafterweise können die Aufnahmezeitbereiche durch mixen des wenigstens einen Empfangssignals mit wenigstens einem periodischen Mischsignal ermittelt werden. Auf diese Weise können die zeitlichen Abstände der Aufnahmezeitbereiche einfacher definiert werden. Vorteilhafterweise können die Aufnahmezeitbereiche durch mixen des wenigstens einen Empfangssignals mit wenigstens einen periodischen Mischsignal und dem in der Phase umgekehrten wenigstens einen periodischen Mischsignal ermittelt werden. Auf diese Weise können die zeitlichen Längen der Aufnahmezeitbereiche genauer definiert werden.

Vorteilhafterweise kann eine Phasendifferenz zwischen dem wenigstens ein Empfangssignal und dem wenigstens einen Sendesignalen aus dem Vergleich eines jeweiligen Maximums und/oder eines jeweils entsprechenden Wendepunkts der Sende-Hüllkurve des wenigstens einen Sendesignals und der Empfangs-Hüllkurve des wenigstens einen Empfangssignals ermittelt werden.

Vorteilhafterweise kann wenigstens eine Entfernungsgröße aus wenigstens einer Phasendifferenz zwischen dem wenigstens einen Sendesignal und dem wenigstens einen Empfangssignal ermittelt werden. Dabei kann die Phasendifferenz ein Maß für eine Laufzeit sein, welche das wenigstens eine Abtastsignal vom Aussenden bis zum Empfang des entsprechenden Echosignals benötigt. Die wenigstens eine Entfernungsgröße kann aus der Phasendifferenz unter Berücksichtigung der Ausbreitungsgeschwindigkeit des Abtastsignals, insbesondere der Lichtgeschwindigkeit, berechnet werden.

Bei einer weiteren vorteilhaften Ausgestaltung des Verfahrens kann wenigstens ein Teil der definierten Aufnahmezeitbereiche in charakteristische Stellen der Sende-Hüllkurve des wenigstens einen Sendesignals gelegt werden. Auf diese Weise können Beginn und/oder Ende der Aufnahmezeitbereiche einfacher charakterisiert und festgestellt werden.

Vorteilhafterweise können die Aufnahmezeitbereiche in Wendepunkten und/oder Maxima der Sende-Hüllkurve gelegt werden. Wendepunkte und Maxima sind charakteristische Stellen der Sende-Hüllkurve, welche einfach ermittelt werden können.

Bei einer weiteren vorteilhaften Ausgestaltung des Verfahrens kann, falls für eine Entfernungsgröße für die herrschende Temperatur keine individuelle Temperaturkorrekturgröße vorliegt, eine passende Temperaturkorrekturgröße aus vorliegenden Temperaturkorrekturgrößen mittels Interpolation ermittelt werden. Auf diese Weise kann auch die Genauigkeit der Ermittlung der Entfernungsgrößen weiter verbessert werden.

Bei einer weiteren vorteilhaften Ausgestaltung des Verfahrens kann aus wenigstens einem elektrischen Sendesignal wenigstens ein elektromagnetisches Abtastsignal erzeugt werden. Auf diese Weise kann der Überwachungsbereich mittels elektromagnetischer Abtastsignale überprüft werden.

Vorteilhafterweise kann aus wenigstens einem elektrischen Sendesignal wenigstens ein Licht-Abtastsignal, wenigstens ein Radar-Abtastsignal oder dergleichen ermittelt werden. Mittels Lichtsignalen oder Radarsignalen kann der Überwachungsbereich effizient überwacht werden. Elektromagnetische Signale können effizient amplitudenmoduliert werden.

Ferner wird die Aufgabe erfindungsgemäß bei der Detektionsvorrichtung dadurch gelöst, dass die Detektionsvorrichtung Mittel zur Durchführung des erfindungsgemäßen Verfahrens aufweist. Auf diese Weise kann das erfindungsgemäße Verfahren direkt in der Detektionsvorrichtung durchgeführt werden.

Erfindungsgemäss weist die Detektionsvorrichtung wenigstens ein Temperaturkorrekturmittel auf, mit welchem eine Temperaturkorrektur durchgeführt wird.

Auf diese Weise kann die Temperaturkorrektur der wenigstens einen Entfernungsgröße in der Detektionsvorrichtung durchgeführt werden.

Vorteilhafterweise kann die Detektionsvorrichtung wenigstens eine Temperaturerfassungseinrichtung, insbesondere wenigstens einen Temperatursensor, aufweisen. Auf diese Weise kann die Systemtemperatur der Detektionsvorrichtung direkt ermittelt werden. Alternativ oder zusätzlich kann die Detektionsvorrichtung mit einer externen Temperaturerfassungseinrichtung verbunden sein. Auf diese Weise kann die Umgebungstemperatur zur Temperaturkorrektur eingesetzt werden.

Vorteilhafterweise kann wenigstens ein Temperaturkorrekturmittel in wenigstens einer Steuer- und Auswerteeinrichtung der Detektionsvorrichtung realisiert sein. Auf diese Weise kann ein Bauteilaufwand verringert werden.

Wenigstens eine Steuer- und Auswerteeinrichtung, wenigstens ein Korrekturmittel, insbesondere ein Temperaturkorrekturmittel und/oder ein Signalformkorrekturmittel, können auf softwaremäßigem und/oder hardwaremäßigem Wege realisiert sein. Dabei können die Funktionen zentral in einem Bauteil oder dezentral in mehreren Bauteilen realisiert sein.

Erfindungsgemäss weist die Detektionsvorrichtung weiterhin wenigstens ein Signalformkorrekturmittel auf, mit dem wenigstens eine Signalformkorrektur durchgeführt wird. Auf diese Weise kann die Signalformkorrektur in der Detektionsvorrichtung selbst durchgeführt werden.

Außerdem wird die Aufgabe erfindungsgemäß bei dem Fahrzeug dadurch gelöst, dass die Detektionsvorrichtung Mittel zur Durchführung des erfindungsgemäßen Verfahrens aufweist. Auf diese Weise kann das erfindungsgemäße Verfahren direkt in der Detektionsvorrichtung durchgeführt werden.

Vorteilhafterweise kann das Fahrzeug wenigstens ein Fahrerassistenzsystem aufweisen. Mit dem Fahrerassistenzsystem kann das Fahrzeug autonom oder wenigstens teilweise autonom betrieben werden.

Vorteilhafterweise kann wenigstens eine Detektionsvorrichtung mit wenigstens einem Fahrerassistenzsystem funktional verbunden sein. Auf diese Weise können Informationen über den Überwachungsbereich, insbesondere Entfernungsgrößen, welche mit der wenigstens einen Detektionsvorrichtung ermittelt werden können, an das wenigstens eine Fahrerassistenzsystem übermittelt werden. Mit dem wenigstens einen Fahrerassistenzsystem kann das Fahrzeug unter Berücksichtigung der Information über den Überwachungsbereich autonom oder wenigstens teilweise autonom betrieben werden.

Im Übrigen gelten die im Zusammenhang mit dem erfindungsgemäßen Verfahren, der erfindungsgemäßen Selektionsvorrichtung und dem erfindungsgemäßen Fahrzeug und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

**Kurze Beschreibung** der Zeichnungen

Es zeigen schematisch

Figur 1    ein Fahrzeug in der Vorderansicht mit einem Fahrerassistenzsystem und einem LiDAR-System zur Bestimmung von Entfernungen von Objekten zu dem Fahrzeug;

Figur 2    eine Funktionsdarstellung des Fahrzeugs mit dem Fahrerassistenzsystem und dem LiDAR-System aus der Figur 1;

Figur 3    ein Signalstärke-Zeit-Diagramm mit einer Sende-Hüllkurve eines amplitudenmodulierten elektrischen Sendesignals des LiDAR-Systems aus den Figuren 1 und 2, aus welchem ein elektromagnetisches Abtastsignal zu Erfassung eines Objekts erzeugt wird, und einer Empfangs-Hüllkurve eines entsprechend amplitudenmodulierten elektrischen Empfangssignals, welches aus einem elektromagnetischen Echosignal des reflektierten elektromagnetischen Abtastsignals ermittelt wird;

Figur 4    ein Signalstärke-Zeit-Diagramm der realen Sende-Hüllkurve des elektrischen Sendesignals aus der Figur 3 mit einem Ausschnitt des elektrischen Sendesignals;

Figur 5    ein Signalstärke-Zeit-Diagramm der realen Empfangs-Hüllkurve des elektrischen Empfangssignals aus der Figur 3 mit einem Ausschnitt des elektrischen Empfangssignals;

Figur 6    ein Signalstärke-Zeit-Diagramm mit jeweiligen sinusförmigen Basis-Hüllkurven zur Annäherung der realen Sende-Hüllkurve des elektrischen Sendesignals und der realen Empfangs-Hüllkurve des elektrischen Empfangssignals aus den Figuren 3 bis 5;

Figur 7    ein Zeigerdiagramm, in dem der Verlauf der Basis-Hüllkurven aus der Figur 6 dem Verlauf der realen Sende-Hüllkurve aus der Figur 3 gegenübergestellt ist;

Figur 8    ein Diagramm, in dem Entfernungsfehler bei der Bestimmung von Entfernungen bei unterschiedlichen Temperaturen den jeweiligen realen Entfernungen gegenübergestellt sind;

Figur 9    ein Diagramm, in dem ermittelte Entfernungen den realen Entfernungen bei unterschiedlichen Temperaturen gegenübergestellt sind.

In den Figuren sind gleiche Bauteile mit gleichen Bezugszeichen versehen.

## Ausführungsform(en) der Erfindung

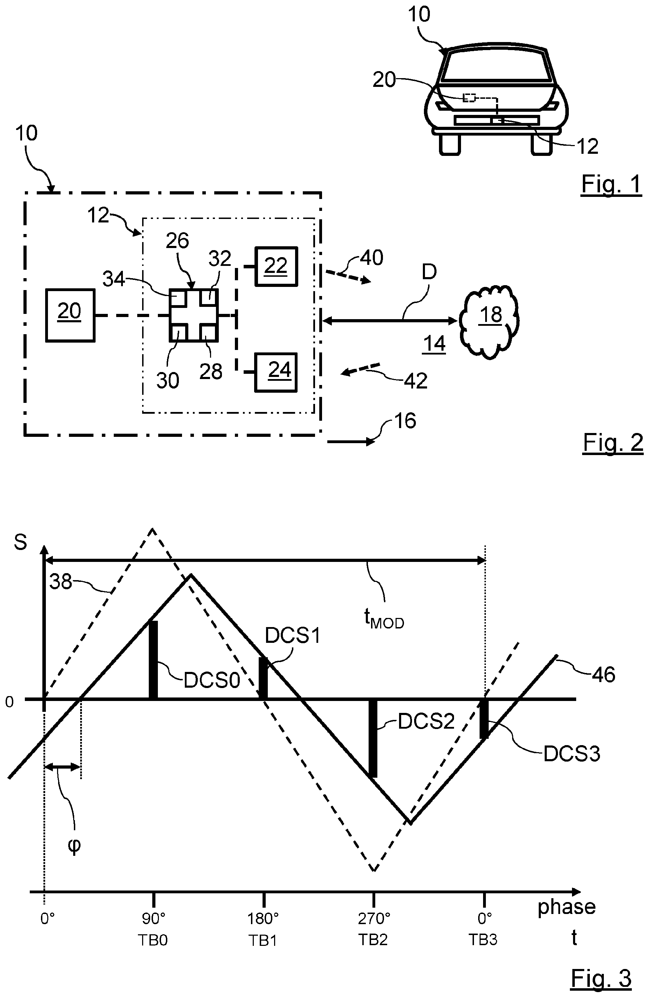

In der Figur 1 ist ein Fahrzeug 10 beispielhaft in Form eines Personenkraftwagens in der Vorderansicht gezeigt. Figur 2 zeigt eine Funktionsdarstellung des Fahrzeugs 10.

Das Fahrzeug 10 verfügt über eine Detektionsvorrichtung beispielhaft in Form eines LiDAR-Systems 12. Das LiDAR-System 12 ist beispielhaft in der vorderen Stoßstange des Fahrzeugs 10 angeordnet. Mit dem LiDAR-System 12 kann ein Überwachungsbereich 14 in Fahrtrichtung 16 vor dem Fahrzeug 10 auf Objekte 18 hin überwacht werden. Das LiDAR-System 12 kann auch an anderer Stelle am Fahrzeug 10 angeordnet und anders ausgerichtet sein. Mit dem LiDAR-System 12 können Objektinformationen, beispielsweise Entfernungen D, Richtungen und Geschwindigkeiten von Objekten 18 relativ zum Fahrzeug 10, respektive zum LiDAR-System 12, ermittelt werden.

Bei den Objekten 18 kann es sich um stehende oder bewegte Objekte, beispielsweise um andere Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, Beispielweise Parklücken, Niederschlag oder dergleichen handeln.

Das LiDAR-System 12 ist mit einem Fahrerassistenzsystem 20 verbunden. Mit dem Fahrerassistenzsystem 20 kann das Fahrzeug 10 autonom oder teilautonom betrieben werden.

Das LiDAR-System 12 umfasst beispielhaft eine Sendeeinrichtung 22, eine Empfangseinrichtung 24 und eine Steuer- und Auswerteeinrichtung 26. Die Steuer- und Auswerteeinrichtung 26 weist ein Entfernungsermittlungsmittel 28, ein Temperaturkorrekturmittel 30, ein Signalformkorrekturmittel 32 und ein Speichermittel 34 auf.

Die Funktionen der Steuer- und Auswerteeinrichtung 26 können zentral oder dezentral realisiert sein. Teile der Funktionen der Steuer- und Auswerteeinrichtung 26 können auch in die Sendeeinrichtung 22 oder die Empfangseinrichtung 24 integriert sein.

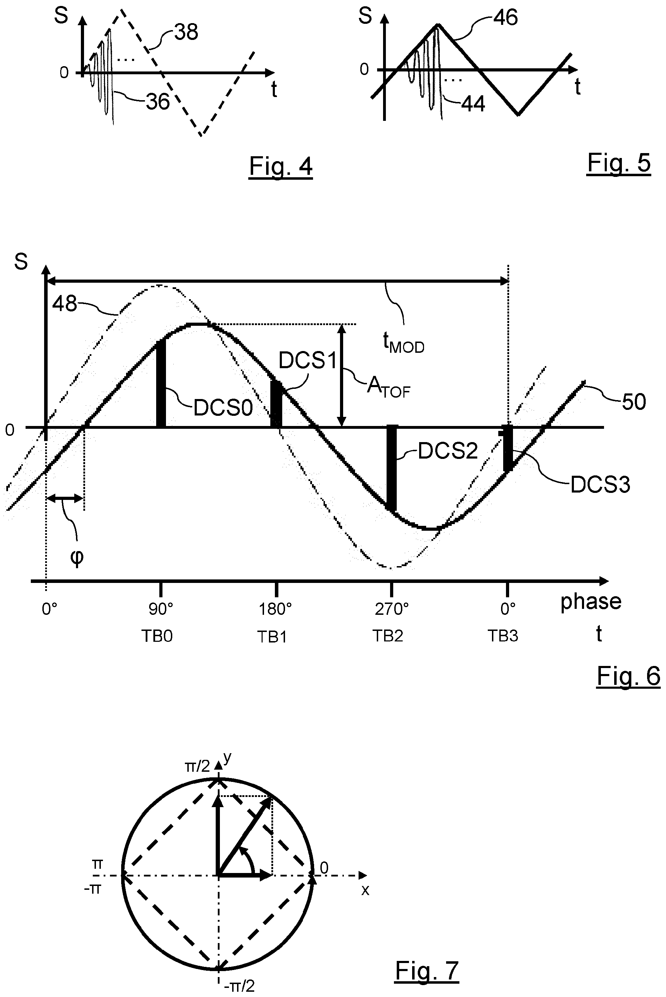

Mit der Steuer- und Auswerteeinrichtung 26 können elektrische Sendesignale 36, wie beispielsweise ein in der Figur 4 gezeigtes amplitudenmoduliertes Dauerstrichsignal, erzeugt werden. **In** der Figur 4 ist der besseren Übersichtlichkeit wegen lediglich ein Ausschnitt des Sendesignals 36 und dessen Sende-Hüllkurve 38 in einem Signalstärke-Zeit-Diagramm gezeigt. Die Sende-Hüllkurve 38 hat beispielhaft die Form einer periodischen Dreieckskurve.

Die Sendeeinrichtung 22 kann mit den elektrischen Sendesignalen 36 angesteuert werden, sodass diese entsprechende elektromagnetische Abtastsignale 40 in Form von Lichtsignalen in den Überwachungsbereich 14 sendet. Die Sendeeinrichtung 22 kann als Lichtquelle beispielsweise einen oder mehrere Laser aufweisen. Darüber hinaus kann die Sendeeinrichtung 22 optional eine Abtastsignal-Umlenkeinrichtung aufweisen, mit welcher das Abtastsignal 40 entsprechend in den Überwachungsbereich 14 gelenkt werden kann.

Die an einem Objekt 18 in Richtung der Empfangseinrichtung 24 als elektromagnetische Echosignale 42 reflektierten elektromagnetischen Abtastsignale 40 können mit der Empfangseinrichtung 24 empfangen werden.

Die Empfangseinrichtung 24 kann optional eine Echosignal-Umlenkeinrichtung aufweisen, mit der die elektromagnetischen Echosignale 42 zu einem Empfänger der Empfangseinrichtung 24 gelenkt werden. Der Empfänger kann beispielsweise Detektoren, zum Beispiel Punktsensoren, Zeilensensoren und/oder Flächensensor, im Besonderen (Lawinen)fotodioden, Photodiodenzeilen, CCD-Sensoren, Active-Pixel-Sensoren, insbesondere CMOS-Sensoren, oder dergleichen, aufweisen oder daraus bestehen. Alternativ können auch mehrere Empfänger vorgesehen sein.

Mit dem Empfänger kann das elektromagnetische Echosignal 42 in ein elektrisches Empfangssignal 44 umgewandelt werden. **In** der Figur 5 ist beispielhaft ein Ausschnitt des Empfangssignal 44 gezeigt, welches zu dem Sendesignal 36 aus der Figur 4 gehört. Das Empfangssignal 44 ist ebenso wie das entsprechende Sendesignal 36 amplitudenmoduliert. Die in der Figur 5 gezeigte Empfangs-Hüllkurve 46 hat wie die Sende-Hüllkurve 38 eine Dreiecksform.

In der Figur 3 sind jeweils eine Periode der Sende-Hüllkurve 38 und der Empfangs-Hüllkurve 46 in einem gemeinsamen Signalstärke-Zeit-Diagramm gegenübergestellt.

Die Empfangs-Hüllkurve 46 ist gegenüber der Sende-Hüllkurve 38 zeitlich versetzt. Der Zeitversatz in Form einer Phasendifferenz $\varphi$ charakterisiert die Flugzeit zwischen dem Aussenden des elektromagnetischen Abtastsignals 40 und dem Empfang des entsprechenden elektromagnetischen Echosignals 42.

Aus der Phasendifferenz $\varphi$ zwischen der Sende-Hüllkurve 38 und der Empfangs-Hüllkurve 46 kann die Entfernung D ermittelt werden. Die Phasenverschiebung $\varphi$ kann daher als Entfernungsgröße für die Entfernung D verwendet werden. Die Flugzeit ist bekanntermaßen proportional zur Entfernung D des Objekts 18 relativ zu dem LiDAR-System 12.

Die Periodendauer der Sende-Hüllkurve 38 ist in der Figur 3 als $t_{MOD}$ bezeichnet. Sie ist der Kehrwert der Modulationsfrequenz fs der Sendesignale 36:

$$f_S = \frac{1}{t_{MOD}}$$

Das Verfahren zur Bestimmung der Phasenverschiebung $\varphi$ wird im Folgenden beschrieben.

Das elektrische Empfangssignal 44 wird in beispielhaft vier zeitlich definierten Aufnahmezeitbereichen $TB_0$, $TB_1$, $TB_2$ und $TB_3$ erfasst. Aus der Signalstärke S des Empfangssignals 44 werden in den Aufnahmezeitbereichen $TB_0$, $TB_1$, $TB_2$ und $TB_3$ jeweilige Empfangsgrößen $DCS_0$, $DCS_1$, $DCS_2$ und $DCS_3$ ermittelt. Die Empfangsgrößen $DCS_0$, $DCS_1$, $DCS_2$ und $DCS_3$ entsprechen bekanntermaßen der jeweiligen Lichtmenge, die während den Aufnahmezeitbereichen $TB_0$, $TB_1$, $TB_2$ und $TB_3$ mit dem Empfänger der Empfangseinrichtung 24 gesammelt wird.

Die Empfangsgrößen $DCS_0$, $DCS_1$, $DCS_2$ und $DCS_3$ charakterisieren entsprechende Empfangssignalabschnitte in dem jeweiligen Aufnahmezeitbereich $TB_0$, $TB_1$, $TB_2$ und $TB_3$ des Empfangssignals 44.

Aufnahmezeitbereich $TB_0$, $TB_1$, $TB_2$ und $TB_3$ beginnen jeweils in einer charakteristischen Phase des Sendesignals 36, beispielsweise in einem Maximum oder einem Wendepunkt. Beispielhaft beginnt der Aufnahmezeitbereich $TB_0$ zu einem Zeitpunkt, welcher einer Phase von 90° des Sendesignals 36 entspricht. Der erste Aufnahmezeitbereich $TB_1$ beginnt zu einem Zeitpunkt, welcher einer Phase von 180° des Sendesignals 36 entspricht. Der zweite Aufnahmezeitbereich $TB_2$ beginnt zu einem Zeitpunkt, welcher einer Phase von 270° des Sendesignals 36 entspricht. Der dritte Aufnahmezeitbereich $TB_3$ beginnt zu einem Zeitpunkt, welcher einer Phase von 360° des Sendesignals 36 entspricht.

Nach der Periodendauer $t_{MOD}$ der Sende-Hüllkurve 38 beginnt die Messung erneut bei einer Phase von 0°. Die Periodendauer $t_{MOD}$ entspricht einer Phase von 360°. Die Phasenverschiebung $\varphi$ kann nur Werte zwischen 0° und 360° annehmen. Entsprechend können nur Entfernungen innerhalb eines Entfernungsbereichs gemessen werden, welche unterhalb einer Eindeutigkeitsentfernung $D_{un}$ liegt. Die Eindeutigkeitsentfernung $D_{un}$ berechnet sich wie folgt:

$$D_{un} = \frac{c}{2} \frac{1}{f_S}$$

Dabei sind c die Lichtgeschwindigkeit und fs die Modulationsfrequenz des Sendesignals 36.

Die Entfernung $D_{TOF}$ wird beispielhaft mit dem Entfernungsermittlungsmittel 28 aus den Entfernungsgrößen DCS0, DCS1, DCS2 und DCS3 unter der Annahme berechnet, dass das Sendesignal 36 statt der realen Sende-Hüllkurve 38 in Form eines Dreiecksignals eine Basis-Sende-Hüllkurve 48, wie in der Figur 6 gezeigt, in Form einer Sinuskurve aufweist. Entsprechend wird angenommen, dass das Empfangssignal 44 statt der Empfangs-Hüllkurve 46 in Form einer Dreieckskurve eine entsprechende Basis-Empfangs-Hüllkurve 50, ebenfalls in Form einer Sinuskurve, aufweist. Die Periodendauer $t_{MOD}$ der Basis-Sende-Hüllkurve 48 entspricht der Periodendauer $t_{MOD}$ der Sende-Hüllkurve 38. Die Entfernung $D_{TOF}$ wird aus der Basis-Sende-Hüllkurve 48 und der Basis-Empfangs-Hüllkurve 50 mithilfe der Empfangsgrößen DCS0, DCS1, DCS2 und DCS3 nach folgender Formel berechnet:

$$D_{TOF} = \frac{c}{2} \frac{1}{2\pi f_S} \left[ \pi + atan2 \left( \frac{DCS3 - DCS1}{DCS2 - DCS0} \right) \right]$$

Dabei sind c die Lichtgeschwindigkeit und fs die Modulationsfrequenz des Sendesignals 36.

Außerdem kann die Amplitude $A_{TOF}$ der Basis-Empfangs-Hüllkurve 50 aus den Empfangsgrößen DCS0, DCS1, DCS2 und DCS3 nach folgender Formel berechnet werden:

$$A_{TOF} = \frac{\sqrt{(DCS2 - DCS0)^2 + (DCS3 - DCS1)^2}}{2}$$

Anschließend wird mit dem Signalformkorrekturmittel 32 die Entfernung $D_{TOF}$ einer Signalformkorrektur unterzogen. Mit der Signalformkorrektur wird die Abweichung der realen Dreiecksform der Sende-Hüllkurve 38 und der Empfangs-Hüllkurve 46 von der für die Berechnung angenommenen Sinusform der Basis-Sende-Hüllkurve 48 und der Basis-Empfangs-Hüllkurve 50 berücksichtigt. Die Abweichung wird beispielsweise durch die sogenannte vierte harmonische Schwingung realisiert. Die Abweichung verfälscht die Bestimmung der Phasenverschiebung φ und damit der Entfernung D. Zur Signalformkorrektur wird eine Signalform-Korrekturtabelle verwendet, welche Signalform-Korrekturwerte für die Messung der Entfernung $D_{TOF}$ in diskreten Distanzschritten enthält.

Die Signalformkorrigierte Entfernung $D_{TOF}$ wird im Folgenden der besseren Unterscheidbarkeit wegen mit $D_{Fkor}$ bezeichnet.

Die signalformkorrigierte Entfernung $D_{TOF}$ wird im Folgenden einer Temperaturkorrektur unterzogen.

Die Sende- und Empfangskomponenten innerhalb des LiDAR-Systems 12 weisen beispielhaft temperaturabhängige Verzögerungen auf. Daher verändern sich auch die ermittelten Entfernungswerte, beispielsweise die Signalformkorrigierte Entfernung $D_{Fkor}$ mit der Systemtemperatur des LiDAR-Systems 12. Es hat sich gezeigt, dass die Temperaturabhängigkeit der Signalformkorrigierten Entfernung $D_{Fkor}$ insbesondere von drei Komponenten abhängt, nämlich

- einem gleichmäßigen Sockelwert, beispielsweise einem Offset, welcher über alle messbaren Entfernungen D konstant bleibt,
- einer Phasenänderung der vierten harmonischen Schwingung,
- einer Veränderung der Steigung von Grundlinien von Abweichungen von ermittelten Entfernungen D, nämlich der Signalformkorrigierten Entfernungen $D_{Fkor}$, von den realen Entfernungen $D_{Real}$.

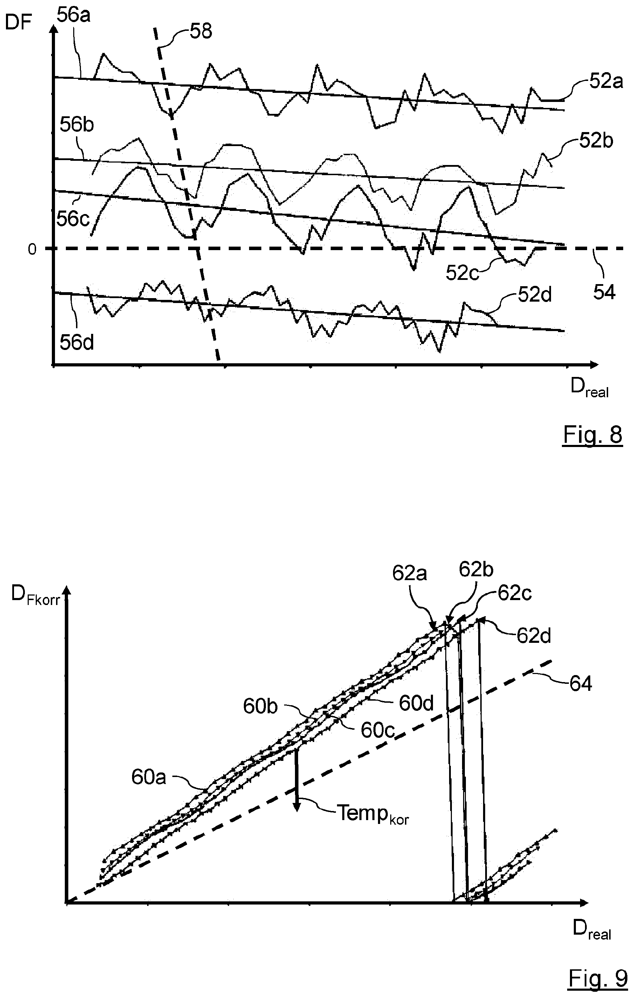

In der Figur 8 sind beispielhaft die Entfernungsfehler $D_F$ zwischen ermittelten Signalformkorrigierten Entfernung $D_{Fkor}$ und realen Entfernungen $D_{Real}$ bei Testmessungen bei vier unterschiedlichen Systemtemperaturen, nämlich 70 °C, 50 °C, 40 °C und -10 °C, für ein Objekt 18 in unterschiedlichen realen Entfernungen $D_{Real}$ gezeigt.

Die in der Figur 8 erste Fehlerkurve 52a von oben entspricht einer Systemtemperatur von 70 °C, die zweite Fehlerkurve 52b entspricht einer Systemtemperatur von 50 °C, die dritte Fehlerkurve 52c entspricht einer Systemtemperatur von 40 °C und die vierte Fehlerkurve 52d entspricht einer Systemtemperatur von -10 °C.

Bei einem idealen LiDAR-System 12 wäre der Entfernungsfehler $D_F$ bei allen realen Entfernungen $D_{Real}$ gleich null. In der Figur 8 ist die Ideallinie 54 der Fehlerkurve gestrichelt angedeutet. Tatsächlich verlaufen die Fehlerkurven 52a, 52b, 52c und 52d jeweils periodisch um eine jeweilige Grundlinie 56a, 56b, 56c und 56d. Die Grundlinien 56a, 56b, 56c und 56d haben jeweils unterschiedliche Steigungen, welche von der Steigung der Ideallinie 54 abweichen. Die Steigung der Ideallinie 54 ist 0.

Bei dem gezeigten Beispiel sind Fehlerkurven 52a, 52b, 52c und 52d gegenüber der Ideallinie 54 um einen jeweiligen individuellen Sockelwert nach oben verschoben. Die Fehlerkurve 52d ist gegenüber der Ideallinie 54 um einen individuellen Sockelwert nach unten verschoben.

Außerdem sind die Phasen der Fehlerkurven 52a, 52b, 52c und 52d untereinander verschoben, welches durch die in der Figur 8 anhand einer gedachten gestrichelten Phasenvergleichslinie 58 angedeutet ist. Dabei sind die Fehlerkurven 52a, 52b, 52c und 52d mit zunehmender Systemtemperatur in Richtung kleinerer realer Entfernungsgrößen $D_{Real}$ verschoben.

In der Figur 9 sind die Messreihen von Entfernungsmessungen bei beispielhaft vier unterschiedlichen Systemtemperaturen dargestellt. Dabei sind jeweils die realen Entfernungen $D_{Real}$ den entsprechenden Signalformkorrigierten Entfernungen $D_{Fkor}$ gegenübergestellt.

Die Messpunkte 60a der in der Figur 9 ersten Messkurve 62a von links wurden bei einer Systemtemperatur von 70 °C ermittelt. Die Messpunkte 60b der zweiten Messkurve 62b wurden bei einer Systemtemperatur von 50 °C ermittelt. Die Messpunkte 60c der dritten Messkurve 62c wurden bei einer Systemtemperatur von 25 °C aufgenommen und die Messpunkte 60d der vierten Messkurve 62d wurden bei einer Temperatur von -10 °C aufgenommen. Zum Vergleich ist eine Idealmesslinie 64 gestrichelt angedeutet. Auf der Idealmesslinie 64 entsprechen die gemessenen Entfernungen $D_{Fkor}$ den realen Entfernungen $D_{Real}$.

Um Temperatureinflüsse auf die Messungen zu kompensieren, wird im Folgenden mit dem Temperaturkorrekturmittel 30 eine Temperaturkorrektur an der Signalformkorrigierten Entfernung $D_{Fkor}$ durchgeführt. Hierzu wird die Signalformkorrigierte Entfernung $D_{Fkor}$ mit einer für diese Signalformkorrigierte Entfernung $D_{Fkor}$ und die herrschende Systemtemperatur individuelle, vorgegebene Temperatur-Korrekturgröße $Temp_{kor}$ beaufschlagt. Der einfachen Unterscheidung wegen wird die signalform- und temperaturkorrigierte Entfernung im Folgenden mit $D_{Ftemp}$ bezeichnet. In der Figur 9 ist beispielhaft eine individuelle Temperatur-Korrekturgröße $Temp_{kor}$ für einen der Messpunkte 60 bei der Systemtemperatur -10° C mit einem Pfeil angedeutet.

Die individuellen Temperatur-Korrekturgrößen $Temp_{kor}$ sind in dem Speichermittel 34 in einer Temperatur-Korrekturtabelle hinterlegt. Die individuellen Temperatur-Korrekturgrößen $Temp_{kor}$ können vorab, beispielsweise am Ende der Produktionslinie, mithilfe von entsprechenden Referenzmessungen ermittelt werden.

Falls für eine Signalformkorrigierte Entfernungsgröße $D_{Fkor}$ für die herrschende Systemtemperatur keine individuelle Temperatur-Korrekturgröße $Temp_{kor}$ in der Temperatur-Korrekturtabelle vorliegt, wird eine passende Temperatur-Korrekturgröße aus in der Temperatur-Korrekturtabelle vorliegenden Temperatur-Korrekturgrößen mittels Interpolation ermittelt. Mit dieser interpolierten Temperatur-Korrekturgröße kann die entsprechende signalformkorrigierte Entfernung $D_{Fkor}$ temperaturkorrigiert werden. Der einfacheren Unterscheidbarkeit wegen wird die signalform- und temperaturkorrigierte Entfernung im Folgenden mit $D_{Ftemp}$ bezeichnet.

Die signalform- und temperaturkorrigierte Entfernung $D_{Ftemp}$ wird an das Fahrerassistenzsystem 20 übermittelt. Die signalform- und temperaturkorrigierte Entfernung $D_{Ftemp}$ wird mit dem Fahrerassistenzsystem 20 zum autonomen oder teilweise autonomen Betrieb des Fahrzeugs 10 verwendet.

Um Abweichungen innerhalb eines Empfängers der Empfangseinrichtung 24, beispielsweise von Kanten zur Mitte eines Empfangsfelds des Empfängers, zu kompensieren, können dieselben Temperatur-Korrekturgrössen $Temp_{kor}$ für LiDAR-Systeme 12 einer Serie von LiDAR-Systemen 12 mit gleichen Empfängern verwendet werden. Auf diese Weise kann ein Herstellungsaufwand insgesamt verringert werden.

## Patentansprüche

**1.** Verfahren zum Betreiben einer Detektionsvorrichtung (12) zur Bestimmung von Entfernungsgrößen ($D_{TOF}$, $D_{Fkorr}$, $D_{FTemp}$), welche Entfernungen (D) von mit der Detektionsvorrichtung (12) erfassten Objekten (18) charakterisieren, bei dem

aus wenigstens einem amplitudenmodulierten elektrischen Sendesignal (36) wenigstens ein Abtastsignal (40) erzeugt wird, welches in wenigstens einen Überwachungsbereich (14) der Detektionsvorrichtung (12) gesendet wird,

aus wenigstens einem Echosignal (42) wenigstens eines in dem wenigstens einen Überwachungsbereich (14) reflektierten Abtastsignals (40) wenigstens ein amplitudenmoduliertes elektrisches Empfangssignal (44) ermittelt wird

aus dem wenigstens einen elektrischen Sendesignal (36) und dem wenigstens einen elektrischen Empfangssignal (44) wenigstens eine Entfernungsgröße ($D_{TOF}$, $D_{Fkorr}$, $D_{FTemp}$) ermittelt wird,

wobei bei der Ermittlung der wenigstens einen Entfernungsgröße ($D_{TOF}$, $D_{Fkorr}$, $D_{FTemp}$) wenigstens eine Korrektur durchgeführt wird,

und wobei eine Temperaturkorrektur durchgeführt wird, bei der die wenigstens eine Entfernungsgröße ($D_{Fkorr}$) mit wenigstens einer Temperaturkorrekturgröße ($Temp_{kor}$) beaufschlagt wird, welche für die wenigstens eine Entfernungsgröße ($D_{Fkorr}$) und eine herrschende Temperatur individuell vorgegeben wird,

**dadurch gekennzeichnet, dass**

die wenigstens eine Entfernungsgröße ($D_{Fkorr}$) ermittelt wird unter der Annahme, dass das wenigstens eine amplitudenmodulierte Sendesignal (36) und das wenigstens eine amplitudenmodulierte Empfangssignal (44) jeweils Basis-Hüllkurvenformen (48, 50) aufweisen,

und wenigstens eine Signalformkorrektur durchgeführt wird, bei der Abweichungen von realen Hüllkurvenformen (38, 46) der Sendesignale (36) und der Empfangssignale (44) von den Basis-Hüllkurvenformen (48, 50) korrigiert werden.

**2.** Verfahren nach Anspruch 1, wobei als Basis-Hüllkurvenformen (48, 50) für wenigstens ein Sendesignal (36) und wenigstens ein Empfangssignal (44) Sinuskurvenformen verwendet werden.

**3.** Verfahren nach Anspruch 1 oder 2, wobei als reale Hüllkurvenformen (38,46) Dreieckskurvenformen oder Sägezahnkurvenformen verwendet werden.

**4.** Verfahren nach einem der vorigen Ansprüche, wobei zur Temperaturkorrektur und/oder zur Signalformkorrektur Korrekturgrößen ($Temp_{kor}$) aus wenigstens einer Korrekturtabelle verwendet werden.

**5.** Verfahren nach einem der vorigen Ansprüche, wobei wenigstens ein Empfangssignal (44) in mehreren zeitlich definierten Aufnahmezeitbereichen (TB0, TB1, TB2, TB3) erfasst wird und aus den jeweiligen Aufnahmezeitbereichen (TB0, TB1, TB2, TB3) zugeordneten Empfangsgrößen (DCS0, DCS1, DCS2, DCS3) eine Entfernungsgröße ($D_{TOF}$) ermittelt wird.

**6.** Verfahren nach Anspruch 5, wobei wenigstens ein Teil der definierten Aufnahmezeitbereiche (TB0, TB1, TB2, TB3) in charakteristische Stellen der Sende-Hüllkurve (38) des wenigstens einen Sendesignals (36) gelegt wird.

**7.** Verfahren nach einem der vorigen Ansprüche, wobei, falls für eine Entfernungsgröße ($D_{FKorr}$) für die herrschende Temperatur keine individuelle Temperaturkorrekturgröße ($Temp_{kor}$) vorliegt, eine passende Temperaturkorrekturgröße ($Temp_{kor}$) aus vorliegenden Temperaturkorrekturgrößen ($Temp_{kor}$) mittels Interpolation ermittelt wird.

**8.** Verfahren nach einem der vorigen Ansprüche, wobei aus wenigstens einem elektrischen Sendesignal (36) wenigstens ein elektromagnetisches Abtastsignal (40) erzeugt wird .

**9.** Detektionsvorrichtung (12) zur Bestimmung von Entfernungsgrößen ($D_{TOF}$, $D_{Fkorr}$, $D_{FTemp}$), welche Entfernungen (D) von mit der Detektionsvorrichtung (12) erfassten Objekten (18) charakterisieren, wobei die Detektionsvorrichtung (12) Mittel (26, 28, 30, 32, 34) zur Durchführung des Verfahrens nach einem der vorigen Ansprüche aufweist.

**10.** Fahrzeug (10) mit wenigstens einer Detektionsvorrichtung (12) gemäss des Anspruchs 9.

**Claims**

**1.** Method for operating a detection apparatus (12) for determining distance variables ($D_{TOF}$, $D_{Fkorr}$, $D_{FTemp}$) which characterize distances (D) from objects (18) detected by the detection apparatus (12), in which method

at least one scanning signal (40) is generated from at least one amplitude-modulated electrical transmission signal (36) and is transmitted into at least one monitoring region (14) of the detection apparatus (12),
at least one amplitude-modulated electrical reception signal (44) is ascertained from at least one echo signal (42) of at least one scanning signal (40) reflected in the at least one monitoring region (14),
at least one distance variable ($D_{TOF}$, $D_{Fkorr}$, $D_{FTemp}$) is ascertained from the at least one electrical transmission signal (36) and the at least one electrical reception signal (44),
wherein, when ascertaining the at least one distance variable ($D_{TOF}$, $D_{Fkorr}$, $D_{FTemp}$), at least one adjustment is carried out,
and wherein a temperature adjustment is carried out in which at least one temperature adjustment variable ($Temp_{kor}$) is applied to the at least one distance variable ($D_{Fkorr}$) , which temperature adjustment variable is specified individually for the at least one distance variable ($D_{Fkorr}$) and a prevailing temperature,
**characterized in that**
the at least one distance variable ($D_{Fkorr}$) is ascertained on the assumption that the at least one amplitude-modulated transmission signal (36) and the at least one amplitude-modulated reception signal (44) each have basic envelope curve shapes (48, 50),
and at least one signal shape adjustment is carried out in which deviations of real envelope curve shapes (38, 46) of the transmission signals (36) and of the reception signals (44) from the basic envelope curve shapes (48, 50) are adjusted.

**2.** Method according to Claim 1, wherein sinusoidal curve shapes are used as basic envelope curve shapes (48, 50) for at least one transmission signal (36) and at least one reception signal (44).

**3.** Method according to Claim 1 or 2, wherein triangular curve shapes or sawtooth curve shapes are used as real envelope curve shapes (38, 46).

**4.** Method according to one of the preceding claims, wherein adjustment variables ($Temp_{kor}$) from at least one adjustment table are used for the temperature adjustment and/or for the signal shape adjustment.

**5.** Method according to one of the preceding claims, wherein at least one reception signal (44) is detected at a plurality of temporally defined recording time ranges (TB0, TB1, TB2, TB3) and a distance variable ($D_{TOF}$) is ascertained from reception variables (DCS0, DCS1, DCS2, DCS3) assigned to the respective recording time ranges (TB0, TB1, TB2, TB3).

**6.** Method according to Claim 5, wherein at least some of the defined recording time ranges (TB0, TB1, TB2, TB3) are placed at characteristic points of the transmission envelope curve (38) of the at least one transmission signal (36).

**7.** Method according to one **of** the preceding claims, wherein, if no individual temperature adjustment variable ($Temp_{kor}$) is present for a distance variable ($D_{FKorr}$) for the prevailing temperature, an appropriate temperature adjustment variable ($Temp_{kor}$) is ascertained by means of interpolation from present temperature adjustment variables ($Temp_{kor}$).

**8.** Method according to one of the preceding claims, wherein at least one electromagnetic scanning signal (40) is generated from at least one electrical transmission signal (36).

**9.** Detection apparatus (12) for determining distance variables ($D_{TOF}$, $D_{Fkorr}$, $D_{FTemp}$) which characterize distances (D) from objects (18) detected by the detection apparatus (12), wherein the detection apparatus (12) has means (26, 28, 30, 32, 34) for carrying out the method according to one of the preceding claims.

**10.** Vehicle (10) having at least one detection apparatus (12) according to Claim 9.

**Revendications**

**1.** Procédé de fonctionnement d'un dispositif de détection (12) pour déterminer des variables de distance ($D_{TOF}$, $D_{Fkorr}$, $D_{FTemp}$), lesdites distances (D) caractérisant des objets (18) détectés par le dispositif de détection (12), dans lequel

à partir d'au moins un signal d'émission électrique modulé en amplitude (36), au moins un signal de balayage (40) est généré, celui-ci étant envoyé dans au moins une région de surveillance (14) du dispositif de détection (12), à partir d'au moins un signal d'écho (42) d'au moins un signal de balayage (40) réfléchi dans l'au moins une région de surveillance (14), au moins un signal de réception électrique modulé en amplitude (44) est déterminé, à partir de l'au moins un signal d'émission électrique (36) et de l'au moins un signal de réception électrique (44), au moins une variable de distance ($D_{TOF}$, $D_{Fkorr}$, $D_{FTemp}$) est déterminée, dans lequel, lors de la détermination de l'au moins une variable de distance ($D_{TOF}$, $D_{Fkorr}$, $D_{FTemp}$), au moins une correction est réalisée, et dans lequel une correction de température est réalisée, lors de laquelle au moins une variable de correction de température ($Temp_{kor}$), qui est définie individuellement pour l'au moins une variable de distance ($D_{Fkorr}$) et une température prédominante, est appliquée à l'au moins une variable de distance ($D_{Fkorr}$), **caractérisé en ce que** l'au moins une variable de distance ($D_{Fkorr}$) est déterminée en supposant que l'au moins un signal d'émission modulé en amplitude (36) et l'au moins un signal de réception modulé en amplitude (44) présentent respectivement des formes d'enveloppe de base (48, 50), et **en ce qu'**au moins une correction de forme de signal est réalisée, lors de laquelle les écarts entre les formes d'enveloppe réelles (38, 46) des signaux d'émission (36) et des signaux de réception (44) et les formes d'enveloppe de base (48, 50) sont corrigés.

**2.** Procédé selon la revendication 1, dans lequel des formes de courbes sinusoïdales sont utilisées comme formes d'enveloppe de base (48, 50) pour au moins un signal d'émission (36) et au moins un signal de réception (44).

**3.** Procédé selon la revendication 1 ou 2, dans lequel des formes de courbes triangulaires ou des formes de courbes en dents de scie sont utilisées comme formes d'enveloppe réelles (38, 46).

4. Procédé selon l'une quelconque des revendications précédentes, dans lequel des variables de correction ($Temp_{kor}$) provenant d'au moins une table de correction sont utilisées pour la correction de température et/ou pour la correction de forme de signal.

5. Procédé selon l'une quelconque des revendications précédentes, dans lequel au moins un signal de réception (44) est détecté dans plusieurs plages de temps d'acquisition (TB0, TB1, TB2, TB3) définies temporellement, et une variable de distance ($D_{TOF}$) est déterminée à partir des variables de réception (DCS0, DCS1, DCS2, DCS3) associées aux plages de temps d'acquisition (TB0, $TB_1$, TB2, TB3) respectives.

6. Procédé selon la revendication 5, dans lequel au moins une partie des plages de temps d'acquisition (TB0, TB1, TB2, TB3) définies est placée en des points caractéristiques de l'enveloppe d'émission (38) de l'au moins un signal d'émission (36).

7. Procédé selon l'une quelconque des revendications précédentes, dans lequel, si aucune variable de correction de température ($Temp_{kor}$) individuelle n'est disponible pour une variable de distance ($D_{FKorr}$) pour la température ambiante, une variable de correction de température ($Temp_{kor}$) appropriée est déterminée par interpolation à partir de variables de correction de température ($Temp_{kor}$) présentes.

8. Procédé selon l'une quelconque des revendications précédentes, dans lequel au moins un signal de balayage électromagnétique (40) est généré à partir d'au moins un signal d'émission électrique (36).

9. Dispositif de détection (12) pour déterminer des variables de distance ($D_{TOF}$, $D_{Fkorr}$, $D_{FTemp}$), lesdites distances (D) caractérisant des objets (18) détectés par le dispositif de détection (12), le dispositif de détection (12) comprenant des moyens (26, 28, 30, 32, 34) destinés à mettre en œuvre le procédé selon l'une quelconque des revendications précédentes.

10. Véhicule (10) comprenant au moins un dispositif de détection (12) selon la revendication 9.

10

_Fig. 1_

10

12

26
34
32
20
30
28
22
24

40
D
18
14
42
16

_Fig. 2_

S

38

DCS1

DCS0

46

0

DCS2

DCS3

$t_{MOD}$

φ

0°    90°    180°    270°    0°    phase
      TB0    TB1    TB2    TB3    t

_Fig. 3_

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200018836 A1
- DE 102013205605 A1
- US 2019293768 A1
- DE 102016122830 A1
- DE 69633524 T2
- CN 111722243 A